# EUROPEAN PATENT APPLICATION

(11) **EP 4 027 241 A1**
(43) Date of publication of application: **13.07.2022**
(21) Application number: 21171843.2
(22) Date of filing: 03.05.2021
(51) Int. Cl.: G06F 9/50

(54) **METHOD AND SYSTEM FOR OPTIMIZING RACK SERVER RESOURCES**

(30) Priority: 07.01.2021 US 202117143908
(71) Applicant: Quanta Computer Inc., Taoyuan City 333 (TW)
(72) Inventor: CHIEN, Wei-Yu, 333 Taoyuan City (TW)
(74) Representative: Michalski Hüttermann & Partner Patentanwälte mbB

(57) **Abstract**

A system and method for distributing tasks between computing devices in a rack. Each of the computing devices have hardware resources and is coupled to a management network. A rack management controller monitors the utilization of hardware resources by each of the computing devices. The rack management controller allocates performance of tasks, such as operating virtual machines, to some of the computing devices to maximize computing devices with substantially full hardware resource utilization. The rack management controller minimizes the allocation of tasks to computing devices with less than full hardware resource utilization. The rack management controller commands any idle computing devices to minimize power consumption.

## Description

### TECHNICAL FIELD

The present disclosure relates generally to resource management for computing devices. More particularly, aspects of this disclosure relate to a system that manages allocation of work based on hardware resource utilization for multiple servers in a rack.

### BACKGROUND

Servers are employed in large numbers for high demand applications, such as network based systems or data centers. The emergence of the cloud for computing applications has increased the demand for data centers. Data centers have numerous servers that store data and run applications accessed by remotely connected, computer device users. A typical data center has physical chassis rack structures with attendant power and communication connections. Each rack may hold multiple computing servers that are networked together.

The servers in a data center facilitate many services for businesses, including executing applications, providing virtualization services, and facilitating Internet commerce. Servers typically have a baseboard management controller (BMC) that manages internal operations and handles network communications with a central management station in a data center. Different networks may be used for exchanging data between servers and exchanging operational data on the operational status of the server through a management network.

A rack usually contains multiple servers that may communicate with each other through a network switch. The servers are physical computing devices, but each server may run multiple virtual machines (VMs) with a variety of applications. Such virtual machines appear to be separate computing devices from outside of the network. Each application of a virtual machine has its particular software service supplied to an end user. These virtual machines share a pool of hardware resources on the server. The hardware resources may include the power supply, cooling fan, processor core, memory, and storage and IO peripherals devices. The utilization rate of each server on rack may depend on factors such as the condition of the server usage mode, the time of day, and quantity of users. Under such conditions, sometimes the workload of a server could reach 100% hardware utilization, and sometimes it may be 50% or less.

However, even if the server runs a light load, the unused hardware resources of a server still consume power and may therefore limit available power to other servers on the rack that require maximum power for full performance. When rack resources such as power are limited, performance of applications running on the fully utilized servers may be restricted as resources are allocated to servers that are at less than utilization. In traditional data center management methods, administrators arrange the servers on a rack for a specific workload purpose. Urgent service requirements usually make the efficient scheduling and allocation of workloads difficult to implement. Thus, traditional data center management methods always allocate the maximum resources for peak service requirements. In this case, the hardware resource utilization rate for all the servers is always low, thus failing to effectively utilize rack resources such as power for the servers.

In general, the best power efficiency is to perform operate servers by using the server hardware resources with complete 100% heavy loading, and achieve a minimum conversion efficiency of 96% at 50% of full power supply loading. These hardware resources may typically include processor cores, system memory, storage controllers, Ethernet controllers, and input/output (IO) peripheral devices. However, operation of a server may not always have heavy load demand for an entire day. The maximum utilization of hardware resources on a server often occurs during certain time periods such as a rush hour or during a breaking unexpected event. Since servers that have low hardware resource utilization still consume power, any underutilized server is an invisible electric power consumer. The extra power consumption by such servers hinders the performance of active servers of the rack system. Aside from wasting power, the extra power consumption may generate potential hardware correctable errors in the non-active servers. For example, when a server has a low workload, its hardware components are in a power saving state due to idle time. The cache coherence of the CPU may not be synced well between the idle and active state thus causing a hardware fault correctable error from updating and restoring data in the CPU cache.

Current rack management software may detect real power consumption of each server in a rack through a power monitor circuit, and an administrator may know the utilization rate of hardware resources by monitoring active virtual machines (VMs) on each server through VM management software. However, there is no good methodology to perform a complete utilization analysis for both the rack and individual servers on the physical hardware layer and software layer. Nothing currently allows a search of available servers and migration of virtual machines to suitable underutilized servers on the rack. Thus, in current rack management systems, underutilized servers consume hardware resources, wasting such resources for the rack. For example, if four servers are being managed and virtual machines are running fully on two of the servers, the other two servers still require extra power.

Thus, there is a need for a system that allows a rack to dynamically change resource allocation in rack hardware in real time. There is a need for a system that allows allocation of hardware resources based on predicted future requirements, and train a model to fulfill the requirements from the monitored data. There is also a need for a system that can evaluate underutilized servers for loading of tasks to maximize power efficiency for a rack.

### SUMMARY

One disclosed example is a system for managing a plurality of computing devices in a rack. Each of the computing devices have hardware resources. A management network is coupled to the computing devices. The system includes a management network interface coupled to the management network. The system includes a controller coupled to the management network interface. The controller monitors the utilization of hardware resources by each of the computing devices. The controller allocates performance of tasks to some of the plurality of computing devices to maximize computing devices with substantially full hardware resource utilization. The controller minimizes computing devices with less than full hardware resource utilization performing the tasks. The controller commands any idle computing devices to minimize power consumption.

A further implementation of the example system is an embodiment where the hardware resources include a processor unit, a memory, and an input/output controller. Another implementation is where each computing device includes a baseboard management controller in communication with the management network. The baseboard management controller allows out-of-band monitoring of hardware resource utilization. Another implementation is where the tasks include operating a migrated virtual machine or executing a software application. Another implementation is where the system includes a power supply supplying power to each of the computing devices. Another implementation is where the system includes a cooling system, wherein the cooling system is controlled by the controller to provide cooling matching the hardware resource utilization of the computing devices. Another implementation is where the controller includes a machine learning model to predict the utilization of each of the computing devices. The controller allocates the tasks based on the prediction from the machine learning model. the controller includes a machine learning model to predict the utilization of each of the plurality of computing devices, the controller allocating tasks based on the prediction from the machine learning module. Another implementation is where the controller produces a manifest for each of the computing devices. The manifest includes information of the configuration of hardware resources of the computing device. The controller determines a hardware configuration score for each of the computing devices from the manifest. The allocation of tasks is determined based on those computing devices having a configuration score exceeding a predetermined value. Another implementation is where the controller is a rack management controller. Another implementation is where the controller executes a rack level virtual machine manager that migrates virtual machines to the computing devices. The virtual machine manager migrates virtual machines to some of the computing devices.

Another disclosed example is a method of allocating tasks between computing devices in a rack. Each of the computing devices include hardware resources. Hardware resource utilization is determined for each of the computing devices in the rack. A hardware utilization level is predicted for each of the computing devices during a future period of time. Tasks are allocated to the computing devices to maximize the hardware resource utilization for some of the computing devices for the future period of time. The computing devices having less than maximum hardware resource utilization performing the tasks are minimized. Idle computing devices are commanded to minimize power consumption

Another implementation of the example method is where the hardware resources include a processor unit, a memory, and an input/output controller. Another implementation is where the example method further includes monitoring the hardware resource utilization of each of the computing devices via a management network. Each computing device includes a baseboard management controller in communication with the management network. The baseboard management controller monitors the hardware resource utilization of the server. Another implementation is where the tasks include operating a migrated virtual machine or executing a software application. Another implementation is where the method further includes controlling a cooling system to provide cooling matching the hardware resource utilization of the computing devices. Another implementation is where the predicting is performed by a machine learning model having inputs of hardware resource utilizations from the computing devices. The tasks are allocated based on the prediction of hardware resource utilization from the machine learning model. Another implementation is where the method includes determining the configurations of the hardware resources for each of the computing devices. A manifest is produced for each of the computing devices. The manifest includes the configuration of the hardware resources. A hardware configuration score is determined for each of the computing device from the manifests. The computing devices for performing tasks are determined based on those computing devices having a configuration score exceeding a predetermined value. Another implementation is where the method includes receiving an additional task and allocating the additional task to an idle or underutilized server having a configuration score exceeding the predetermined value.

Another disclosed example is a rack management controller having a network interface for communicating with a management network in communication with servers in a rack. The rack management controller has a monitoring module collecting hardware utilization data from each of the servers in the rack. The rack management controller has a controller that allocates tasks to some of the servers to maximize servers with substantially full hardware resource utilization. The controller minimizes servers with less than full hardware resource utilization to perform the tasks. The controller commands any idle servers to minimize power consumption.

Another implementation of the example rack management controller includes a virtual machine manager. The tasks include execution of virtual machines and the virtual machine manager migrates virtual machines to the servers.

The above summary is not intended to represent each embodiment or every aspect of the present disclosure. Rather, the foregoing summary merely provides an example of some of the novel aspects and features set forth herein. The above features and advantages, and other features and advantages of the present disclosure, will be readily apparent from the following detailed description of representative embodiments and modes for carrying out the present invention, when taken in connection with the accompanying drawings and the appended claims.

### BRIEF DESCRIPTION OF THE DRAWINGS

The disclosure will be better understood from the following description of exemplary embodiments together with reference to the accompanying drawings, in which:
FIG. 1 is a block diagram of a rack of computing devices that allows allocation of virtual machines on the servers;
FIG. 2 is a series of resource requirement graphs over time in different use scenarios for servers in a rack;
FIG. 3A is a series of utilization graphs for hardware resource utilization of a server in a low utilization scenario;
FIG. 3B is a series of utilization graphs for hardware resource utilization of a server in a high utilization scenario;
FIG. 4 is a table showing power allocation among several example servers in the rack system in FIG. 1;
FIG. 5 is a diagram of the process to assign hardware resources in the rack system in FIG. 1;
FIG. 6 is a block diagram of in-band and out-of-band monitoring of hardware resource utilization in the rack system in FIG. 1;
FIG. 7 is a flow diagram of a routine for monitoring hardware resource utilization in the rack system in FIG. 1;
FIG. 8A is a diagram of input data and outputs from an example machine learning model;
FIG. 8B is a table of input data relating to hardware resource utilization categories for the machine learning module;
FIG. 9 is a flow diagram of the process of training the machine learning model to predict hardware utilization;
FIG. 10A is a table showing different hardware resource configurations for compiling an example score for an unused server;
FIG. 10B is an example table of the resulting hardware configuration scores of two servers for purposes of assigning an unused server; and
FIG. 11 is a flow diagram of an example routine to schedule different servers based on predicted overall hardware utilization to efficiently use rack resources.

The present disclosure is susceptible to various modifications and alternative forms. Some representative embodiments have been shown by way of example in the drawings and will be described in detail herein. It should be understood, however, that the invention is not intended to be limited to the particular forms disclosed. Rather, the disclosure is to cover all modifications, equivalents, and alternatives falling within the scope of the invention as defined by the appended claims.

### DETAILED DESCRIPTION OF THE ILLUSTRATED EMBODIMENTS

The present inventions can be embodied in many different forms. Representative embodiments are shown in the drawings, and will herein be described in detail. The present disclosure is an example or illustration of the principles of the present disclosure, and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference, or otherwise. For purposes of the present detailed description, unless specifically disclaimed, the singular includes the plural and vice versa; and the word "including" means "including without limitation." Moreover, words of approximation, such as "about," "almost," "substantially," "approximately," and the like, can be used herein to mean "at," "near," or "nearly at," or "within 3-5% of," or "within acceptable manufacturing tolerances," or any logical combination thereof, for example.

The examples disclosed herein include a system and method to perform rack server utilization analysis. The analysis is based from monitoring data from the physical hardware layer and the software layer of the servers. The system may utilize the Baseboard Management Controller (BMC) and Basic Input/Output System (BIOS) of each of the servers to deliver the current utilization of hardware components to an administrator to determine a suitable server or servers for migration of required virtual machines. Virtual machines are migrated to servers in the rack such that as many servers as possible are placed in heavy load state. The system eliminates unnecessary servers by putting such servers in a sleep state, therefore reducing total power consumption and increasing efficiency of servers on the rack.

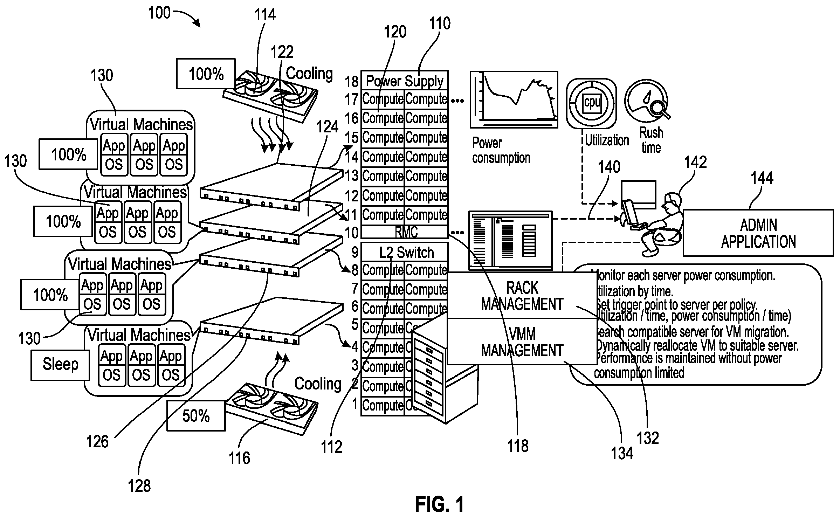

FIG. 1 shows a rack system 100 that includes computer devices and other components that are networked together. In this example, computer devices may include servers such as application or storage servers, network switches, storage devices, and the like. The rack system 100 has a physical rack structure with a series of slots that hold the computer devices and other components. In this example, a power supply 110 and an L2 network switch 112 occupy two of the slots in the rack system 100. The L2 network switch 112 routes data between servers on the rack 100 through a data network. The example rack system 100 also includes a cooling system that includes top and bottom cooling units 114 and 116. The cooling units 114 and 116 are located on the rack to provide cooling to the computer devices and components of the rack system 100. In this example, a rack management controller (RMC) 118 occupies one of the slots. The rack management controller 118 manages the operation of power and cooling to the computing devices and components in the rack system 100.

The other slots each hold computing devices such as 1U servers 120. In this example, each slot holds two 1U servers 120. For explanation purposes, all the servers 120 in the rack system 100 have identically sized chassis housings. However, other computing devices having different sized chassis housings, as well as different types of computing devices may occupy one or more slots, or three or more devices may occupy a single slot. In this example, there are four servers 122, 124, 126, 128 from the servers 120 that are highlighted as examples of computing devices managed by an example management routine. The example management routine conserves rack power by monitoring hardware resources and allocation of tasks among the rack servers. In this example, the servers 122 and 124 are inserted in slots at the top of the rack system 100 while the servers 126 and 128 are inserted in slots at the bottom part of the rack system 100. In this example, any of the servers 120 may be configured for virtual machines 130 that are considered separate computing devices, but are run by the same server hardware. It is to be understood that the principles described herein are not limited to the highlighted servers 122, 124, 126, and 128, but may be applied to any of the servers 120 or any other configuration of computing devices in a rack.

In this example, the rack system 100 must manage nine separate virtual machines among the four highlighted servers 122, 124, 126, and 128. Each of the active virtual machines 130 includes an operating system and an application or applications that are executed by the virtual machine. As a result of the example management routine managed by the rack management controller 118, the servers 122, 124, and 126 are set at full hardware resource utilization and therefore each executes three virtual machines 130. The server 128 is set to a sleep mode and therefore does not consume a large amount of power. Rack resources such as power and cooling may be efficiently employed by the assignment of virtual machines to servers with full hardware resource utilization by the example management routine. For example, power consumption for the example rack system 100 is largely from the three active servers 122, 124, and 126. The required power is based on the full hardware resource utilization of the servers 122, 124, and 126 running the virtual machines 130.

The management routine also efficiently employs cooling resources of the cooling system. In this example, the top cooling unit 114 is operated by the routine at 100% to cool the two active servers 122 and 124. However, the bottom cooling unit 116 is operated by the routine at 50% because only one active server 126 is operational. This allows efficient energy use for the cooling units 114 and 116. In contrast, if the example management routine did not allocate a heavy load to the three servers 122, 124, and 126 exclusively, all four servers 122, 124, 126, and 128 must be cooled, requiring 100% operation of both cooling units 114 and 116.

The rack management controller 118 may run rack management software 132. In this example, the rack management controller 118 also runs a rack level virtual machine management software application 134. The rack level virtual machine management software application 134 allows the creation and provisioning of virtual machines that may be migrated to any available server 120 in the rack system 100. The rack management controller 118 is connected to a management network 140 via a network interface. The management network 140 allows the rack management controller 118 to determine the operational status of the servers 120 as well as communicate control signals to the power unit 110, switch 112, and cooling units 114 and 116. As will be explained below, the rack management software 132 monitors hardware resource utilization on the servers 120, and through the virtual machine management software 134, migrates the required virtual machines to servers 120 as needed. The management routine for migrating virtual machines or executing applications efficiently employs power consumption and cooling for the rack system 100 by maximizing the hardware resource utilization on as many servers as possible. The number of underutilized servers is minimized while unused servers are either placed in a sleep state or a powered down state to minimize unnecessary power consumption.

The servers 120 each include a baseboard management controller (BMC) and a basic input output system (BIOS). The BMC is a controller that manages the operation of the server. The BMC includes a network interface card or network interface controller that is coupled to the management network 140. The servers 120 all include hardware resources that may perform functions such as storage, computing, and switching. For example, the hardware resources may be processor cores, memory devices, and input/output controllers such as network controllers. Both the BMC and BIOS may monitor the utilization of hardware resources on the server. The BMC and BIOS also read configuration information on the hardware resources of the server. The BMC in this example allows collection of the utilization data and configuration data. This data is communicated through the management network 140 to the rack management controller 118.

A remote management station 142 is coupled to the management network 140. The remote management station 142 runs management applications to monitor and control the rack management controller 118 and the servers on the rack through the management network 142. The administrator application 144 generates a console interface for an administrator to manage all racks, and server nodes on racks such as the rack system 100 in a data center. The remote management station 142 is thus in communication with the rack management controller 118 that allows monitoring of the status of the rack system 100. An administrative application 144 allows for an administrator to log into the rack management controller 118 setting operations and monitoring results for the rack system 100. The administrative application 144 allows an administrator to login to the rack management controller 118, watch the status of components in the rack, and adjust a policy of virtual machine migration to the servers in the rack system 100.

The servers 120 in the rack system 100 may perform different tasks such as executing the virtual machines 130 or execution of other applications. Performance of tasks may be allocated in different ways among the servers 120, that may result in different levels of hardware resource utilization. Different levels of hardware utilization in turn determines the need for rack level resources such as power and cooling capability.

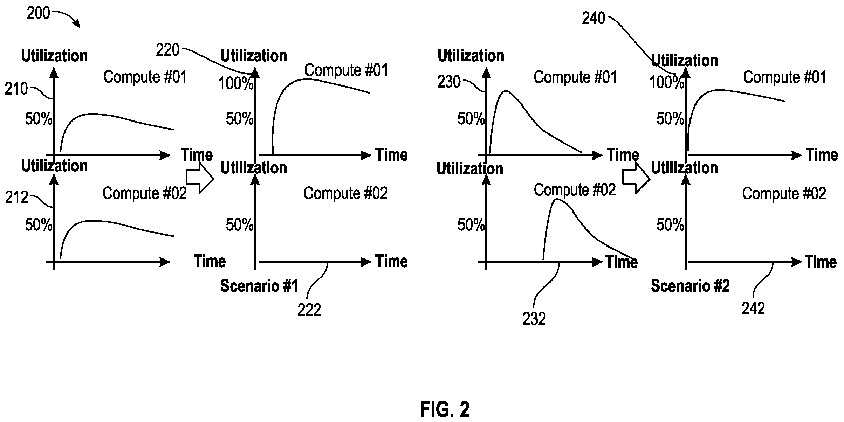

FIG. 2 shows a series of utilization graphs for two servers in the rack system 100 that demonstrate different server hardware utilization levels to accomplish the same tasks. In this example, the tasks require 100% of hardware utilization in a server over a period of time. One allocation to accomplish the tasks is shown in graphs 210 and 212. The graph 210 shows a first server having a 50% utilization over a time period while a second graph 212 shows a second server has a 50% utilization over the same time period. Thus, the 100% hardware utilization for the required tasks is achieved by utilizing both servers over the period of time. However, an alternate set of utilization graphs 220 and 222 for the two server nodes shows that the first server can be set at a heavy 100% hardware resource utilization as shown in the graph 220, while the second server can be set at 0% utilization as shown in the graph 222. This configuration in graphs 220 and 222 accomplishes the same tasks as the graphs 210 and 212.

FIG. 2 also shows a series utilization graphs in another scenario of tasks that require 100% of hardware utilization at different points in time. A graph 230 and a graph 232 show the utilization of two servers during different times for a first configuration. Thus, the first server has high utilization during the initial part of the time period as shown by the graph 230, while the second server has high utilization during the end of the time period as shown by the graph 232. An alternate configuration may be through running the first server as a heavy load during both time periods as shown in a graph 240, while the second server is idle during the entire time as shown in graph 242.

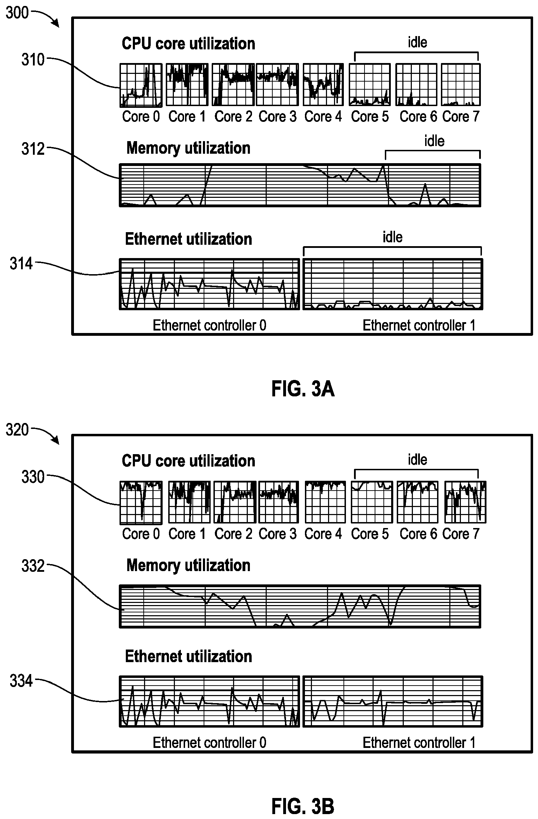

The utilization of hardware resources for a server at a high level is proportional to power requirements. However, at low levels of hardware resource utilization to maintain necessary support functions, a computing device will consume more power than required by hardware resource utilization. FIG. 3A shows a series of graphs 300 for hardware resource use in an example server that is not at full resource utilization. A first set of graphs 310 shows the utilization of processor cores on the example server over an example time period. A second graph 312 shows memory utilization of the example server over the time period. Another set of graphs 314 shows the utilization of two input/output controllers (in this case two Ethernet controllers) of the example server. In this example, as shown in the graphs 310, while cores 0-4 are utilized fully over the time period, cores 5-7 are idle over the time period. The graph 312 shows that memory utilization is less than 100% at certain points over the time period. In this example, only one of the input/output controllers is used and thus one of the graphs 314 show full use of one controller while the other graph shows low or no utilization of the other input/output controller.

FIG. 3B shows a series of graphs 320 for hardware resource use in an example server with relatively greater hardware utilization than that shown in FIG. 3A. In this example, all eight cores are generally at full utilization over the period of time as shown in graphs 330. A graph 332 shows memory utilization over time for the example server. As shown in the graph 332, the memory utilization is generally high over most of the period of time. A set of graphs 334 shows that the utilization of both of the input/output controllers are generally high compared to the graphs 314 in FIG. 3A.

In general, the most efficient use of power is to operate the rack servers by maximizing the hardware resources of servers with complete 100% heavy loading. This achieves a minimum conversion efficiency of 96% at 50% of full power supply loading. However, operational demands on servers in a rack may not always be at heavy demand for an entire time period such as during an entire day. The utilization of hardware resources on rack servers therefore will vary based on certain time periods. The utilization may be heavier during certain periods of heavy demand (a "rush hour"), at medium levels during other periods of time, or may suddenly increase to address a breaking, unexpected event. During down periods at less than full utilization, power consumption may be out of proportion to the requirements of the underutilized hardware resources.

In FIG. 1, any of the servers 120 that stay in an idle state or are in a state where the average loading is below 50% of the maximum load always consume some power from the rack power supply 118. Such servers that have a below average load or are idle create heat because the hardware resources are operated at lower levels and thus consume power. This also requires cooling from one of the cooling units 114 or 116. The power consumed by underutilized servers is essentially wasted since an idle server does not perform any computational tasks. Moreover, additional power is required by the cooling units 114 and 116 for cooling the underused or idle server or servers.

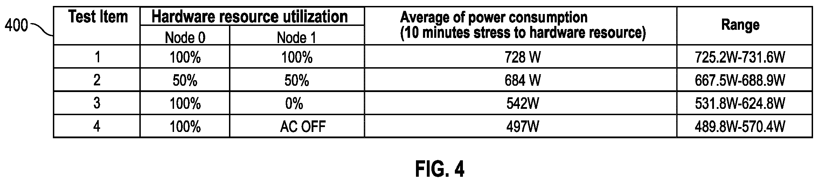

FIG. 4 shows a table 400 that includes power consumption for an example two servers at different utilization levels. The table 400 shows average power consumption and the range of power consumption for two 2U node servers with the same hardware resource configuration. The table 400 shows measurements of total power consumption from a redundant power supply under hardware resource loading over a test period of ten minutes. For example, the first row of the table 400 shows the power average power consumption (728W) and power range of two fully utilized server nodes. The second row of the table 400 shows the average power consumption (684W) and power range when the two nodes are at 50% hardware resource utilization. The third row shows the average power consumption (542W) and power range when one server node is at 100% resource utilization and the other server node is at 0% hardware resource utilization. The fourth row shows the average power consumption (497W) and power range when one server node is at 100% resource utilization and the other server node powered down. As the third and fourth rows show, heavy 100% loading of only one server node consumes less power than 50% loading of two server nodes, while providing the same computational capacity. Thus, when virtual machine or software operations use the hardware resources of only one the dual server nodes at 100%, the total power consumption is less than the power consumption when both server nodes are at 50% hardware resource utilization to perform the same virtual machine or software operations. The lowest power consumption is when one server node is at 100% hardware resource utilization while the other server node is powered down.

Based on the above and referring back to FIG. 1, proper utilization of hardware resources on different rack servers offers a method to reduce power consumption from unused hardware resources of servers in the rack system 100. This may be accomplished by an example management routine automatically migrating software and or virtual machine operations to some servers 120 in the rack system 100 to run at full hardware resource utilization and powering down all other unused servers. Such a routine attempts to minimize servers operating at less than 100% hardware utilization. The routine includes collaboration between the BMC and BIOS on each of the servers 120, the rack management software 132, and virtual machine management software 134 to monitor overall hardware resource utilization and assign computational tasks to the servers 120. The collaboration accesses the API of the virtual machine manager software 134 to reallocate virtual machines to servers 120 as needed.

In order to determine hardware resource utilization, different controllers in the rack system 100 are used. Different service executors running on different controllers monitor different hardware resources. Thus, the BMC/processors of the servers 120 and the rack management software 132 monitor hardware resource utilization of each server 120. The BMCs in combination with the rack management software 132 also perform analysis of hardware resource usage behavior in all of the servers 120 in the rack system 100.

In this example, the rack management software 132 working with the BMC and the BIOS of the server may create a notification policy that allows the rack management software 132 to decide whether a server of the servers 120 is in a state of excessive hardware resource idling. The BMC and BIOS of the server and the rack management software 132 may also create a dynamic manifest of the servers 120 that are capable of accepting the migration of a virtual machine to the hardware resources for full loading of the server. The dynamic manifest will also show servers that are underused and thus may be used to migrate virtual machines outside to another server, allowing the underused server to be powered down.

The server BMC and rack management software 132 may execute various monitoring and command functions. These functions include triggering an event to the virtual machine management software 134 of the rack layer to start to dynamically migrate virtual machines to the destination of the server manifest. These commands also include switching an unused rack server to a power saving mode or resuming the performance mode of an unused server. The commands also include adjusting the cooling units 114 and 116 of rack cooling system dynamically according to hardware resource use by the servers 120.

Finally, total power consumption by the servers in the rack system 100 is controlled by the example rack management software 132 based on accurate monitoring of hardware resource utilization in the servers 120. The monitoring may use a hardware resource utilization prediction from a machine learning model for efficient scheduling of virtual machine migration and or application execution tasks among the servers 120, resulting in real time power saving for the rack system 100.

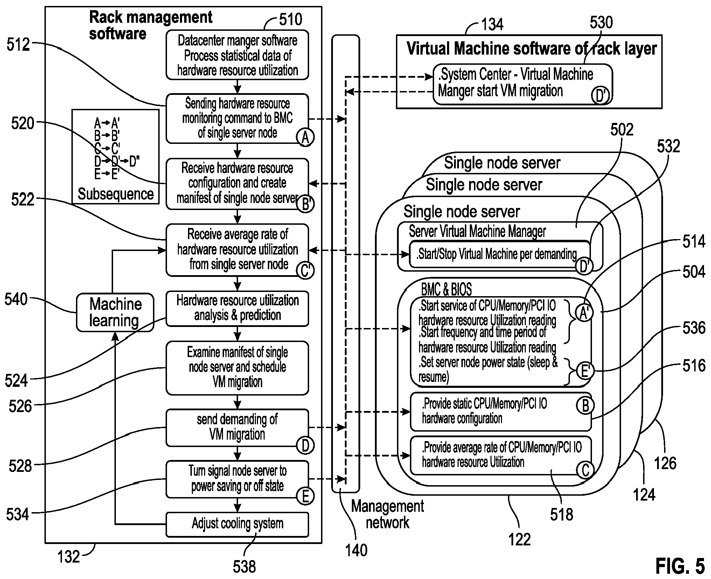

FIG. 5 shows a process of efficient hardware resource utilization between the rack management software 132, the virtual machine software 134, and different servers such as the servers 122, 124, and 126. Communications between the rack management software 132, virtual machine management software 134, and the servers 122, 124, and 126 occur over the management network 140. Each of the servers, such as the server 122 includes a server virtual machine manager 502, and a BMC/BIOS 504.

The administration application 144 run by the administration station 142 in FIG. 1 reads the statistical analysis of hardware resource utilization for each of the servers 122, 124, and 126 (510). The rack management software 132 sends a hardware resource monitoring command to the BMC 504 of one of the servers such as the server 122 (512). The BMC 504 will start the services of the CPU, memory, and IO controllers to read the respective hardware resource utilization (514). The BMC 504 sets the frequency and time period of the reading of the hardware resource utilization. In this example, the frequency is 60 times and the time period is one second, but both higher and lower frequencies and time periods may be used. The BMC 504 communicates the hardware configurations for the processor, memory, and input/output controllers over the management network 140 (516).

In this example, the BMC 504 determines the average rate of CPU, memory, and IO controller utilization. The BMC 504 communicates the average rate of CPU, memory, and IO controller utilization over the set time period through the management network 140 (518). The rack management software 132 receives the hardware resource configuration from the BMC and BIOS 504 and creates a manifest of the server 122 (520). The manifest consists of the types and configurations of hardware resources on a server. For example, the manifest may detail the number of cores in the processor, the size of the memory, and the speed of the peripheral controller ports, allowing for an evaluation of the overall capability of the server. The rack management software 132 receives the average rate of hardware resource utilization from the BMC 504 (522). The rack management software 132 then performs a hardware resource utilization analysis for the server and predicts hardware resource utilization for the server (524). The rack management software 132 examines the manifest of the servers and schedules virtual machine migration or running other software applications based on all of the manifests of all available servers (526).

The rack management software 132 will send a demand for virtual machine migration or software application scheduling to different available servers based on the manifests (528). In this example, the demand is received by the rack layer virtual machine software 134 that initiates virtual machine migration for the server or servers (530). The migrated virtual machine is started by the server virtual machine manager 502 for an available server such as the server 122 (532). The server virtual machine manager 502 starts or stops virtual machines on the server based on the demand received from the rack level virtual machine management software 134. When the rack management software 132 determines there is no need to utilize a specific server, the rack management software 132 sends a command to the BMC 504 of the server to turn the server to a power saving or off state (534). The BMC 504 of the specified server receives the power command and sets the power state of the server accordingly (536). The rack management software 132 also will adjust the rack cooling system (cooling units 114 and 116 in FIG. 1) to provide required cooling for the utilized servers in the rack system 100, according to the predicted hardware utilization (538). In this example, a machine learning module 540 receives feedback data from the rack management software 132 for determining and refining prediction weights for a machine learning model that predicts the hardware usage of the servers on the rack system 100. These predictions may be applied to schedule required operations such as allocating virtual machines to minimize power consumption and other rack resources.

Monitoring of hardware resource utilization by the BMC/BIOS 504 and rack management software 132 in FIG. 5 may be performed both in-band and out-of-band for each single server in this example. In this example, a server node unit such as the server 122 in FIG. 5 includes a processor, memory, and input/output controllers, which are an aggregated and independent ecosystem. As explained above, some of the slots of the rack system 100 may hold a server chassis that includes two or more server nodes. For example, a server chassis may include a tray that holds multiple server node units. For ease of explanation, it is assumed that the server 122 is a single server node unit.

Monitoring the hardware resource utilization of a server node unit from an operating system is an example of an in-band monitoring solution. This is a common and available solution allowing an administrator to retrieve utilization data easily from a software deployment point of view. However, this solution may not be as precise as raw data that goes through a native hardware meter directly, thus a real hardware resource usage value of a server node unit such as a processor can be more accurately calculated by retrieving row-data of the internal registers of the processor and the registers of the processor chipset. This data is obtained by an out-of-band solution for the hardware resource monitoring process. The out-of-band mechanism may be built inside the BMC 504 or the processor itself by executing firmware that may read the native hardware meters, such the internal registers of the processor or the chipset.

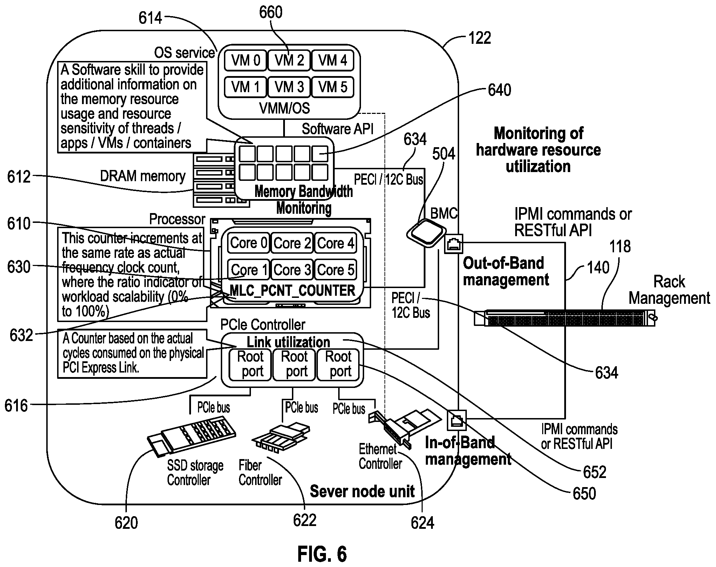

FIG. 6 shows the monitoring of hardware resource utilization on a server such as the server 122 via both in-band and out-of-band solutions. FIG. 6 shows a server node unit, such as the server 122 and the rack management controller 118. Although the server 122 is a single server node unit in this example, it is to be understood the server 122 may include multiple server node units. In this example, the BMC 504 of the server 122 communicates with the rack management controller via the management network 140.

The example server 122 includes a processor unit 610, a memory 612, an operating system (OS) service 614, and a peripheral controller 616. In this example, the memory 612 is dynamic random access memory (DRAM) that is used by the processor 610 for computing operations. In this example, the peripheral controller 616 is a peripheral component interconnect express (PCIe) type controller, but any similar peripheral control protocol may be used. The peripheral controller 616 interfaces with different peripherals such as a solid state drive (SSD) controller 620, a fiber optics controller 622, and an Ethernet controller 624.

In this example, the processor unit 610 includes a series of cores 630. In this example, the processor unit 610 includes a MLC_PCNT counter 632 that increments at the same rate as the actual frequency clock count of the processor 610. The MLC_PCNT counter 632 is an internal register of the processor unit 610. The counter value provides a hardware view of workload scalability, which is a rough assessment of the relationship between frequency and workload performance to software, OS application, and platform firmware. The BMC 504 can read this value to determine CPU utilization. The ratio indicator of workload scalability is derived from the frequency count clock from the counter 632. The processor unit 610 communicates with the BMC 504 via a bus 634 such as a platform environment control interface (PECI) bus or an I2C bus.

In this example, a software API 640 running on the processor unit 610 that provides memory bandwidth monitoring. In this example the API 640 is an OS kernel that provides software AIR/Commands to calculate memory sizes occupied by different software applications. The software API 640 is a software mechanism that provides additional information on the memory resource usage and resource sensitivity of processing of threads, applications, virtual machines, and containers by the processor unit 610. The software API 640 may communicate with the BMC 504 via the bus 634 in an in-band communication. An out-of-band communication may use IPMI through the Ethernet controller 624. Alternatively, memory bandwidth may be monitored by the BMC 504 directly by communicating with a memory controller via the bus 634. The BMC 504 may read a counter in the memory controller that relates to memory bus traffic, and therefore determine memory bandwidth.

The example peripheral controller 616 includes a series of root ports 650 that are coupled to the peripheral controllers 620, 622, and 624. The peripheral controller 616 communicates with the BMC 504 via the bus 634. The peripheral controller 616 includes a link utilization counter 652 that is based on the actual cycles consumed on the physical PCIe links. Base on the PCIe specification, isochronous bandwidth budgeting for PCIe links can be derived based on link parameters such as isochronous payload size and the speed and width of the link. Each PCIe root port has a unique link utilization counter register for its child device. The data in the link utilization counter 650 thus is related to the input/output controller utilization. In this example, out-of-band management may be performed by the BMC 504 by reading the link utilization counter 652, the MLC PCNT counter 632, and the software API 640. The out-of-band management solution therefore may provide data that may be used to determine processor unit utilization, memory utilization, and input/output controller resource utilization.

Alternatively, in-band management monitoring may occur based on communications over the management network 140 through IMPI commands or through the RESTful API commands. In this example, the Ethernet controller 624 may communicate over the management network 140 to the rack management controller 118 by sending IMPI commands or RESTful API commands. In this example, the OS service 614 manages a series of virtual machines 660 that are executed by the server 122. The OS service 614 may thus provide resource utilization data based on the current state of operation of the virtual machines 660 through the Ethernet controller 624 to the rack management controller 118. Alternatively, the OS service 614 may also provide data on applications executed by the server 122 that may be used to determine hardware utilization. The OS kernel has internal commands that allows a real time view of CPU and memory utilization for monitoring uptime, average workload, and physical and swap memory status. When the administrator start deploying a virtual machine, the administrator thus may determine whether the CPU core/system memory is available for allocating the virtual machine and whether hardware resources are sufficient to fulfill the virtual machine run requirements. This information is supplied through the OS kernel internal commands to the virtual machine manager.

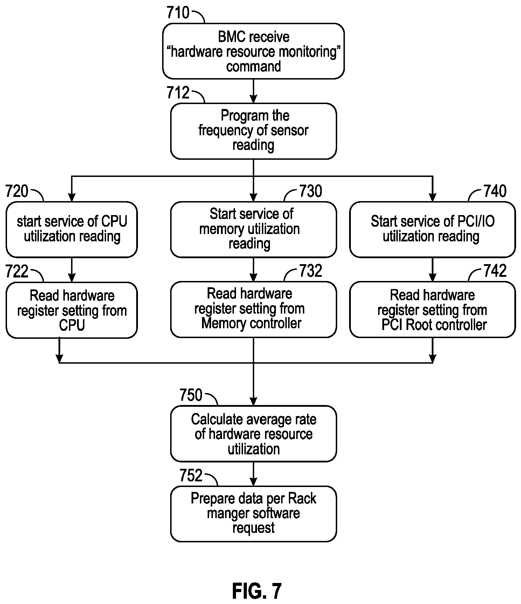

FIG. 7 is a flow diagram of the process of hardware resource utilization monitoring performed by the BMC for each server such as the BMC 504 for the server 122 in FIG. 6. The BMC 504 first receives a hardware resource monitoring command from the rack management server 118 in FIG. 6 (710). The BMC then programs the frequency of sensor readings (712). The frequency of sensor readings depends on the type of resource. The sensor reading frequency is also a parameter of training data that is submitted to the machine learning model for the prediction of resource usage. Generally, the frequency of processor sensor readings is the higher than the frequency of memory sensor readings. The frequency of memory sensor readings is generally higher than the frequency of input/output device sensor readings.

The BMC 504 then simultaneously starts different services for processor, memory, and input/output monitoring. Thus, the BMC 504 starts a CPU reading service (720). The reading service reads the hardware register setting from the CPU that is associated with processor unit utilization (722). The BMC 504 also starts a memory utilization reading service (730). In this example, the memory utilization reading service reads the hardware register setting from a memory controller (732). As explained above, a software API may be executed for memory utilization instead. The BMC 504 also starts an input/output controller utilization reading service (740). The input/output utilization reading service reads the hardware setting from the PCIe root controller, such as the controller 616 in FIG. 6 (742).

Once the reads (722, 732, 742) are performed, the BMC 504 calculates the average rate of hardware resource utilization (750). The BMC 504 executes multiple threads for reading the utilization of the different resources over the time period to determine the average rate of hardware resource utilization. The BMC 504 then prepares the hardware resource utilization data in response to the request by the management software 132 of the rack management controller 118 in FIG. 6 (752). The rack management controller 118 performs the analysis of hardware utilization and predicts hardware utilization. Alternatively, the analysis may be performed on board the BMC 504.

Analysis of usage behavior of hardware resource utilization for all of the servers may be performed by a machine learning based control loop to collect the hardware resource utilization of each individual server node and predict future hardware utilization for that server node. The input data for the machine learning loop may include hardware resource demands, periods of major hardware component workload at heavy load, medium load and low load, and total bandwidth against the bandwidth that results from low use. The data from each server node in the rack system 100 is used to represent a curve of hardware resource utilization and available workload based on time.

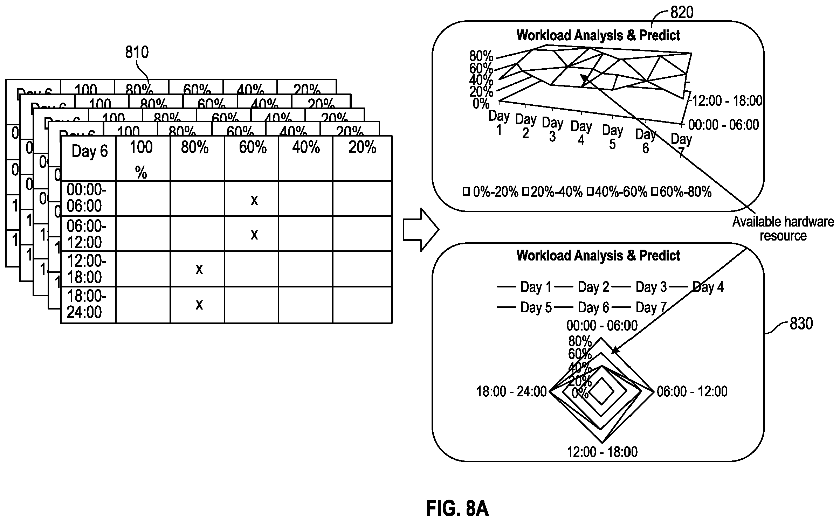

FIG. 8A is a diagram of a machine learning process for training a machine learning model to predict resource utilization in a rack system such as the rack system 100 in FIG. 1. The machine learning model has inputs 810 of resource utilization levels over periods of time for one of the server nodes of the rack system 100. The inputs 810 include the average hardware utilization for the server node during certain time periods for each day, such as for six hour periods. Thus, each table of inputs is the level of utilization for the server over a day. Multiple tables are input to reflect utilization levels over multiple days. The average hardware utilization is classified into five percentile ranges such as between 100% and 80% or between 60% and 40% in this example. The output 820 is the analysis of workload and predictions of workloads of each of the servers in the rack system 100. An availability output 830 may show the available hardware resources.

In the machine learning loop in FIG. 8A, adjusting the scale of the periods in the inputs 810 to smaller increments, such as from 6 hours to 1 hour or even smaller increments, or adjusting the percentile ranges of utilization, can obtain a more precise pattern for the hardware resource utilization prediction. If this mechanism uses the machine learning model with a suitable algorithm, the prediction report of hardware resource behavior and utilization for each server may be generated more rapidly.

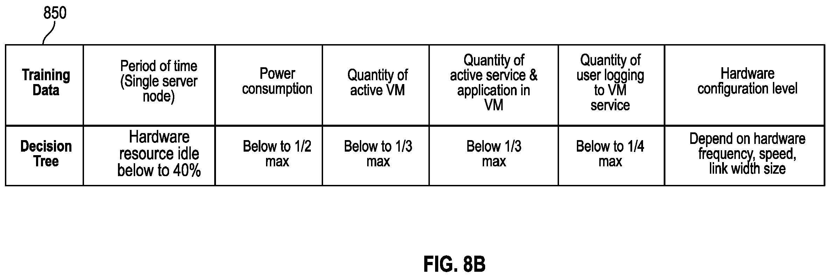

FIG. 8B is a table 850 of categories of training data for the machine learning module to predict whether a server node is in a hardware resource idle state. The first row of the table 850 includes input factors that include: a) period of time; b) power consumption over the period of time; c) quantity of active virtual machines over the period of time; d) quantity of active services and applications in the virtual machines over the period of time; e) quantity of users logging into the virtual machine service; and f) the hardware configuration level. The second row of the table 850 includes the decision tree for determining underutilization based on each of the input factors and respective weights for the input factors. The combination of the factors and respective weights produces an overall score for a server node that reflects whether the server node is in an idle or busy state. The table 850 is an example of input training data during model training. The purpose of the training the machine learning model is to refine the weights so the resulting prediction whether a single server node is in a hardware resource idle state in a certain period of time is accurate.

The prediction of idle or underused status of a server during certain periods allows the management routine to migrate virtual machines or applications to idle or underused servers to increase the hardware utilization of selected servers. The notification policy of the hardware resource monitoring routine defines an alert for any server node which is under an idle state. The routine then begins an escalation path to trigger the rack management software 132 to start virtual machine migration and or software execution to the idle server. The routine then aggregates the virtual machine migration until hardware resource utilization of destination server node reaches 100%.

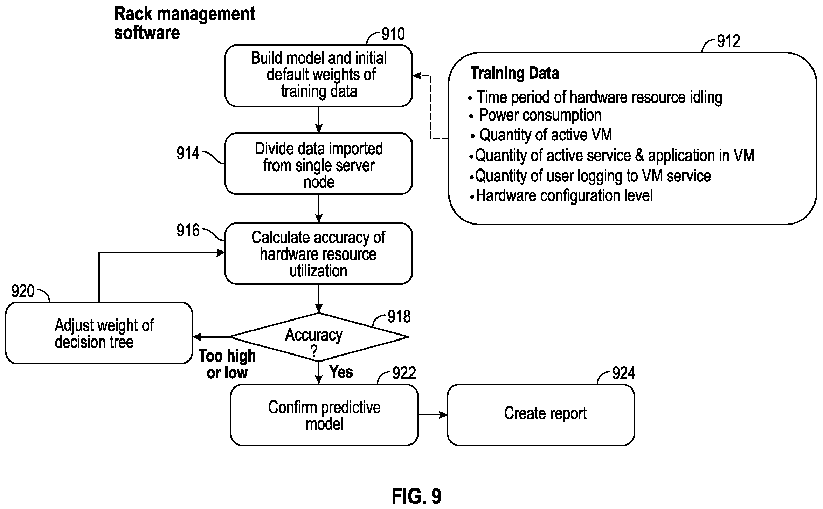

FIG. 9 is a training routine for a machine learning model that may be executed by the rack management software 132 in FIG. 1 for prediction of hardware resource utilization. The routine first builds the machine learning model and sets initial default weights for the training data (910). In this example, a set of training data 912 includes values for the time periods of hardware resource idling, the power consumption, the quantity of active virtual machines, the quantity of active service and applications in the virtual machine, the quantity of users logging into the virtual machine, and the hardware configuration level. As explained above the training data 912 may be organized in a table such as the table 850 in FIG. 8B. The initial weights for each of the values in the table 850 are set by the routine.

The routine divides the data imported from a single server node (914). In this example, the data may be divided into static and dynamic training data. The static data contains data that is relatively static such as quantity of active virtual machines and the number of users logging in to the virtual machines. Dynamic data includes data such as power consumption, and the timeframe of peak utilization. The routine then determines the accuracy of the corresponding hardware resource utilization based on the input factors (916). The routine determines whether the accuracy is at an acceptable level (918). If the accuracy is not at an acceptable level, the weights in the model are adjusted (920). The model with readjusted weights is used to calculate the accuracy of hardware resource utilization (916). When accuracy is acceptable, the predictive model is confirmed (922). A report is then created (924).

Training data (both past data and current data) is thus used to optimize the machine learning model repeatedly. The training may continue until a descent of error (deviation) of output as expected is observed, and thus a suitable machine learning model is established. The machine learning model may be subjected to more new testing data, which can start predicting utilization of server in future, and confirm that there are no exceptions and overfitting. The confirmation of the report is to determine whether utilization of server is underused with a timeframe and to accurately predict the hardware utilization condition during any time of day.

The machine-learning model may implement machine-learning structures such as a neural network, decision tree ensemble, support vector machine, Bayesian network, or gradient boosting machine. Such structures can be configured to implement either linear or non-linear predictive models for predictions of resource utilization during the operation of the rack system 100.

For example, data analysis may be carried out by any one or more of supervised machine learning, deep learning, a convolutional neural network, and a recurrent neural network. In addition to descriptive and predictive supervised machine learning with hand-crafted features, it is possible to implement deep learning on the machine-learning engine. In addition to descriptive and predictive supervised machine learning with hand-crafted features, it is possible to implement deep learning on the machine-learning engine. This typically relies on a larger amount of scored (labeled) data (such as many hundreds of data points collected by the rack management controller 118 for normal and abnormal conditions. This approach may implement many interconnected layers of neurons to form a neural network ("deeper" than a simple neural network), such that more and more complex features are "learned" by each layer. Machine learning can use many more variables than hand-crafted features or simple decision trees. After a model is established as sufficiently accurate, it can continue to be trained with received hardware resource utilization data to further refine the model.

The resulting hardware resource utilization analysis recommendation report (924) refers to the hardware configuration level of a single server node at incremental periods over a future period of time. The analysis performed by the rack management software 132 will collect the reports for each of the server nodes in the rack system 100. Thus, the rack management software 132 estimates which available server nodes could accept the migration of virtual machines and other applications for full loading. The rack management software 132 also determines which servers may be powered down for power saving from the reports.

The rack management software 132 also compiles the hardware capability, capacity, firmware settings, and software accommodation of each server node in the form of a manifest. The analysis categorizes each major hardware component of each server node and labels the corresponding utilization level. A hardware configuration score determined from the manifest is used to categorize each server node from a baseline utilization for the purpose of desirability for migrating virtual machines or executing software applications.

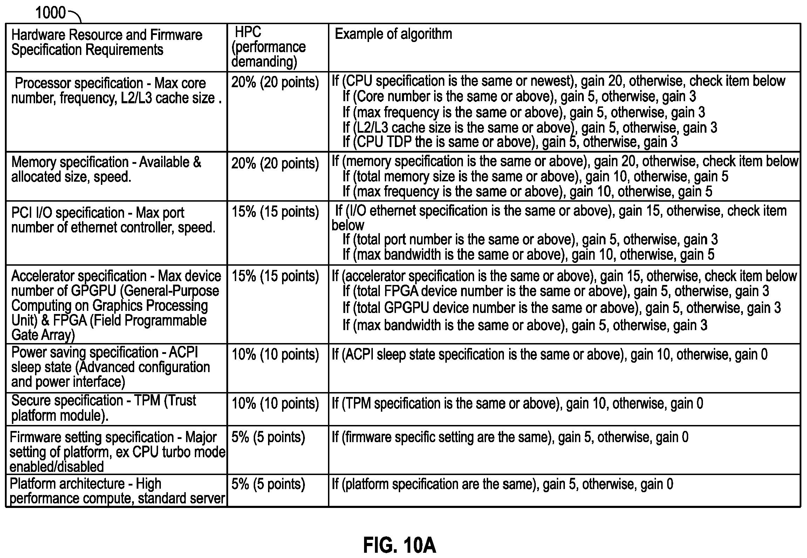

FIG. 10A shows a table 1000 of different parameters analyzed by the rack management software 132 to score servers for desirability for assigning tasks. The parameters are configurations that are determined by the BMC/BIOS of each of the servers in the rack. In the table 1000, the first six specification requirements are mandatory while the last two specification requirements (firmware setting and platform) are optional.

As shown in FIG. 10A, certain hardware resource specification requirements contribute to the score. The processor specification provides 20% of the aggregate score. The relevant baseline specification values include the maximum core number, frequency of the CPU, the L2/L3 cache size, and the thermal design power (TDP). Thus, the example algorithm determines if the specification of the server exceeds the baseline values. If the baseline values are exceeded, 20 points are assigned. If any of the four specific processor specifications is met or exceeded, 5 points are assigned, otherwise 3 points are assigned. The memory specification includes available memory and allocated memory size and the speed, and provides 20% of the aggregate score. If the baseline values are exceeded, 20 points are assigned. If any of the two specific memory specifications is met or exceeded, 10 points are assigned, otherwise 5 points are assigned. The PCIe input/output specification includes the maximum ports of the Ethernet controller and the speed of the connections, and provides 15% of the aggregate score. If the baseline values are exceeded, 15 points are assigned. If the total port number is met or exceeded, 5 points are assigned, otherwise 3 points are assigned. If the maximum bandwidth is the same or exceeded, 10 points are assigned, otherwise 5 points are assigned. An accelerator specification that includes the maximum number of GPGPU (General-Purpose Computing on Graphics Processing Unit) devices, number of FPGA (Field Programmable Gate Array) devices, and maximum bandwidth, and provides 15% of the aggregate score. If the baseline values are exceeded, 15 points are assigned. If any of the three specific accelerator specifications is met or exceeded, 5 points are assigned, otherwise 3 points are assigned.

Other specifications relate to the firmware for the server. The power saving specification, ACPI sleep state (Advanced configuration and power interface), accounts for 10% of the aggregate score. If the server is meets or exceeds the ACPI specification, 10 points are assigned. The final mandatory specification is the secure specification, TPM (Trust platform module), that accounts for 10% of the aggregate score. If the server is meets or exceeds the TPM specification, 10 points are assigned.

Additional optional specifications that account for 5% of the aggregate score include a firmware setting specification and platform architecture specification. The firmware setting specification is a major setting of the platform and whether a CPU turbo mode is enabled or disabled, and may be assigned 5 points if enabled. The platform architecture specification is assigned 5 points if the server is a high performance computer as opposed to a standard server.

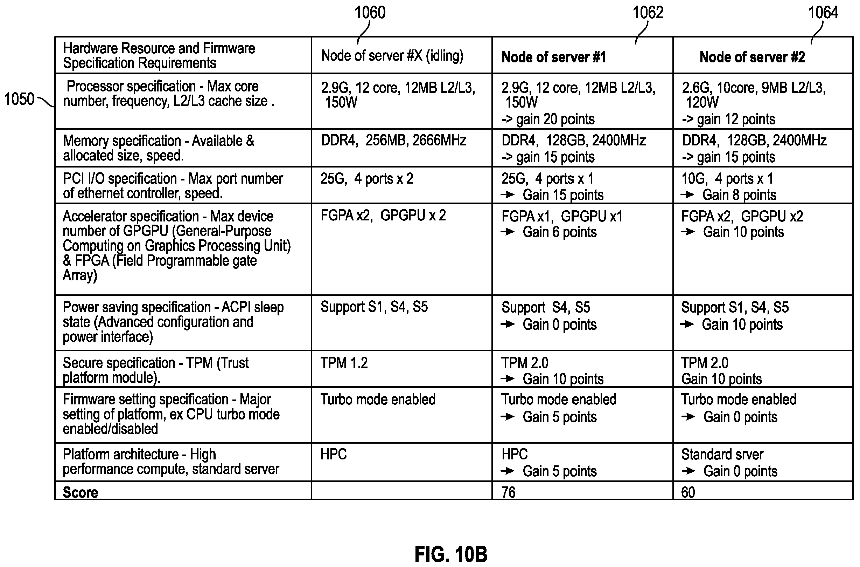

FIG. 10B is a table 1050 that shows an example of scores aggregated for two different server nodes. One column 1060 shows the baseline specifications for each of the parameters described in FIG. 10A. The scores of the first server for each of the specification parameters is shown in a column 1062. The aggregate score of the first server is 76 in this example. The scores for the different hardware configurations of the second server is shown in a column 1064. The aggregate score of the second server is 60 in this example. The different scores are based on the differences in hardware for the first and second servers in comparison to the baseline specifications in column 1060. For example, in relation to the number of cores specification, the first server has 12 cores meeting the baseline specification for 5 points, while the second server only has 10 cores thus meriting only 3 points.

In this example, the first server is a more desirable candidate for performing tasks such as operating virtual machines or software because it has a higher aggregate score. The example management routine would therefore prioritize assignment of the tasks to the first server if both servers are idle. Alternatively, all servers over a minimum score may be considered for assignment. For example, servers exceeding a certain score such as 70 may be preferred for executing virtual machines. In this example, only the first server exceeds 70 with a score of 76 and would be considered for executing a needed virtual machine. If, for example, the second server had a score of 72, it would also be considered for executing the virtual machine.

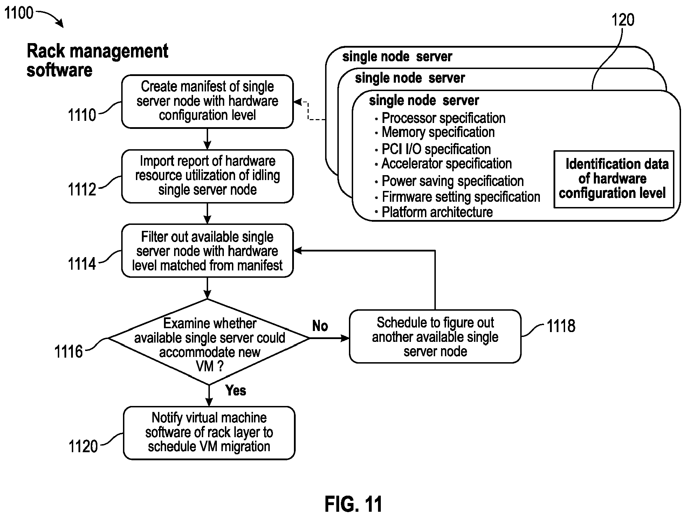

FIG. 11 is a flow diagram 1100 of an example management routine for the rack management software 132 to allocate virtual machines to different servers 120 in the rack system 100 in FIG. 1. The flow diagram in FIG. 11 is representative of example machine readable instructions for allocating virtual machines to servers 120 in the rack system 100 in FIG. 1. In this example, the machine readable instructions comprise an algorithm for execution by: (a) a processor; (b) a controller; and/or (c) one or more other suitable processing device(s). The algorithm may be embodied in software stored on tangible media such as flash memory, CD-ROM, floppy disk, hard drive, digital video (versatile) disk (DVD), or other memory devices. However, persons of ordinary skill in the art will readily appreciate that the entire algorithm and/or parts thereof can alternatively be executed by a device other than a processor and/or embodied in firmware or dedicated hardware in a well-known manner (e.g., it may be implemented by an application specific integrated circuit [ASIC], a programmable logic device [PLD], a field programmable logic device [FPLD], a field programmable gate array [FPGA], discrete logic, etc.). For example, any or all of the components of the interfaces can be implemented by software, hardware, and/or firmware. Also, some or all of the machine readable instructions represented by the flowcharts may be implemented manually. Further, although the example algorithm is described with reference to the flowcharts illustrated in FIG. 11, persons of ordinary skill in the art will readily appreciate that many other methods of implementing the example machine readable instructions may alternatively be used. For example, the order of execution of the blocks may be changed, and/or some of the blocks described may be changed, eliminated, or combined.

The routine first creates a manifest for each of the server nodes 120 in the rack in accordance with scoring such as that in the example shown in FIG. 10A (1110). The manifest includes identification data of the hardware configuration level based on the specifications for the hardware resources in the server such as those in the table 1000 in FIG. 10A. The routine then imports the reports of the hardware utilization of all idling or underutilized servers via the collection process as explained in FIG. 7 (1112). The manifests and the reports are determined for all of the servers of the rack system 100. Each report includes the current status of all hardware resource utilization from the routine in FIG. 7 and the machine learning output of the predicted utilization in a future period such as over the next two days. The routine identifies idling or underutilized server nodes, and reviews the hardware configurations of such server nodes from the respective manifests.

The routine then filters out an available server node with an acceptable hardware specification score from the manifest (1114). The routine then examines whether the available single server has the hardware resource utilization that allows accommodation of a new virtual machine (1116). If the selected server cannot accommodate a new virtual machine, the routine determines the next available server (1118). The routine then returns to filter the next available server node with the acceptable hardware specification score from the manifest (1120). If the selected server can accommodate a virtual machine (1116), the routine notifies the rack level virtual machine software 134 to schedule virtual machine migration to the selected server. The example routine in FIG. 11 is repeated until all of the required virtual machines are allocated to servers in the rack system 100 to maximize the servers at substantially full hardware resource utilization.

The management software 132 controls the virtual machine migration and aggregates the virtual machines to an available server node with the same hardware configuration level as the previous server running the virtual machines. The migration may be performed by "live virtual machine migration," a routine supported by existing virtual machine management application. Live migration allows moving virtual machines between servers without an interruption to the operating system of the servers. The rack management software 132 requests the virtual machine management software 134 of the rack layer to migrate a virtual machine to a destination server node. The manifest insures that the server has sufficient hardware resources to meet the virtual machine requirement (e.g., number of cores, memory size, I/O peripherals, and network ports and the like). The rack management software 132 also keeps monitoring hardware resource utilization of the destination server node and the cooling system of the rack system 100 to prevent active processors from throttling down from temperature overheat.

Although a request for virtual machine migration from the rack management software 132 to the virtual machine management software 134 is made, the virtual machine management software 134 can either schedule the virtual migration as planned or deny the migration request based on a higher priority purpose such as scheduled software upgrades, security patches, or system backups. The communication and application programming interface between the rack management software 132 and the virtual machine management software 134 may include software such as VMware or Microsoft hypervisor. The rack management software 132 may use the distinct protocol definition of the virtual machine management software to send demands for virtual machine migration and confirm the successful migration from virtual machine management software 134

Once multiple virtual machines have been migrated to an available single server, the server will be at a full loading state as 100% of hardware resource utilization. The original server or servers running the virtual machines may be set to either a sleep state or shutdown state to minimize power use. If a new hardware resource request is needed from the rack management software 132, such as the need for more virtual machines or applications, the sleeping/shutdown single server nodes may be resumed to active state immediately. The manifests for the sleeping/shutdown server nodes may be examined to determine those servers with sufficient or desirable hardware resources to fulfill the resource request. The rack management software 132 in conjunction with the virtual machine management software 134 may create the required new virtual machines for operation by the newly active servers.

The commands for setting the power level of a server may be made from the rack management software 132 to one of the servers 120 in FIG. 1 over the management network 140. As explained above, the management software 132 provides commands to any idle servers to minimize power consumption by entering a sleep state or turning off. The management software 132 may simply send an IPMI command or Redfish command to the BMC of the server node to execute the power command. For example, an IMPI command may be the Set ACPI Power State Command. An example Redfish command is the Power State command, described as:

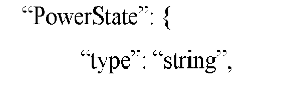

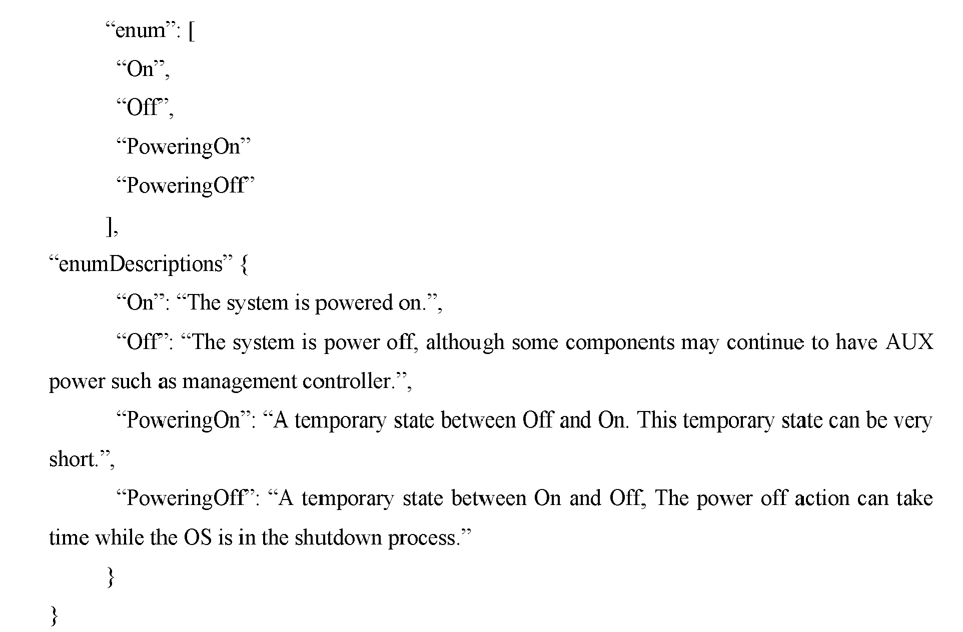

Finally, the level of cooling provided by the cooling system of the rack system 100 is usually adjusted based on a temperature sensor reading to adjust fan speed. In this example, the temperature sensor may be in a temperature sensitive area on one or more of the servers or reside on appropriate locations on the rack. The purpose of the cooling system is to reduce the hardware temperature and prevent system crashes in the servers 120 from overheating. Once the rack manager software 132 aggregates the full workload to the active servers of rack system 100, the rack manager 118 may readjust the fan speeds of the cooling system to focus cooling on the locations of the rack with the fully loaded servers, and reduce fan speeds of the cooling units that are in proximity to powered down servers.

As used in this application, the terms "component," "module," "system," or the like, generally refer to a computer-related entity, either hardware (e.g., a circuit), a combination of hardware and software, software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller, as well as the controller, can be a component. One or more components may reside within a process and/or thread of execution, and a component may be localized on one computer and/or distributed between two or more computers. Further, a "device" can come in the form of specially designed hardware; generalized hardware made specialized by the execution of software thereon that enables the hardware to perform specific function; software stored on a computer-readable medium; or a combination thereof.

The terminology used herein is for the purpose of describing particular embodiments only, and is not intended to be limiting of the invention. As used herein, the singular forms "a," "an," and "the" are intended to include the plural forms as well, unless the context clearly indicates otherwise. Furthermore, to the extent that the terms "including," "includes," "having," "has," "with," or variants thereof, are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art. Furthermore, terms, such as those defined in commonly used dictionaries, should be interpreted as having a meaning that is consistent with their meaning in the context of the relevant art, and will not be interpreted in an idealized or overly formal sense unless expressly so defined herein.

While various embodiments of the present invention have been described above, it should be understood that they have been presented by way of example only, and not limitation. Although the invention has been illustrated and described with respect to one or more implementations, equivalent alterations and modifications will occur or be known to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above described embodiments. Rather, the scope of the invention should be defined in accordance with the following claims and their equivalents.

## Claims

1. A system for managing a plurality of computing devices in a rack, each of the computing devices having hardware resources; and a management network coupled to the plurality of computing devices, the system comprising:
a management network interface coupled to the management network; and
a controller coupled to the management network interface, the controller operable to:
monitor utilization of hardware resources by each of the plurality of computing devices;
allocate performance of tasks to some of the plurality of computing devices to maximize computing devices with substantially full hardware resource utilization;
minimize computing devices with less than full hardware resource utilization performing the tasks; and
command any idle computing devices to minimize power consumption.

2. The system of the previous claim, wherein the hardware resources include a processor unit, a memory, and an input/output controller, and/or wherein each computing device includes a baseboard management controller in communication with the management network, the baseboard management controller allowing out-of-band monitoring of hardware resource utilization.

3. The system of any of the previous claims, wherein the tasks include operating a migrated virtual machine or executing a software application, and/or further comprising a power supply supplying power to each of the plurality of computing devices.

4. The system of any of the previous claims, further comprising a cooling system, wherein the cooling system is controlled by the controller to provide cooling matching the hardware resource utilization of the plurality of computing devices.

5. The system of any of the previous claims, wherein the controller includes a machine learning model to predict the utilization of each of the plurality of computing devices, the controller allocating tasks based on the prediction from the machine learning model.

6. The system of any of the previous claims, wherein the controller is operable to:
produce a manifest for each of the computing devices, the manifest including information of the configuration of hardware resources of the computing device;
determine a hardware configuration score for each of the computing devices from the manifests; and
wherein the allocation of tasks is determined based on those computing devices having a configuration score exceeding a predetermined value.

7. The system of any of the previous claims, wherein the controller is a rack management controller, and/or wherein the controller is operable to execute a rack level virtual machine manager that migrates virtual machines to the computing devices, the virtual machine manager migrating virtual machines to the some of the computing devices.

8. A method of allocating tasks between computing devices in a rack, each of the computing devices including hardware resources, the method comprising:
determining hardware resource utilization for each of the computing devices in the rack;
predicting a hardware utilization level for each of the computing devices during a future period of time;
allocating tasks to the computing devices to maximize the hardware resource utilization for some of the computing devices for the future period of time;
minimizing the computing devices having less than maximum hardware resource utilization performing the tasks; and
commanding idle computing devices to minimize power consumption.

9. The method of the previous method claim, wherein the hardware resources include a processor unit, a memory, and an input/output controller, and/or further comprising monitoring the hardware resource utilization of each of the computing devices via a management network, wherein each computing device includes a baseboard management controller in communication with the management network, the baseboard management controller monitoring the hardware resource utilization of the server.

10. The method of any of the previous method claims, wherein the tasks include operating a migrated virtual machine or executing a software application, and/or further comprising controlling a cooling system to provide cooling matching the hardware resource utilization of the plurality of computing devices.

11. The method of any of the previous method claims, wherein the predicting is performed by a machine learning model having inputs of hardware resource utilizations from the computing devices, and wherein the tasks are allocated based on the prediction of hardware resource utilization from the machine learning model.

12. The method of any of the previous method claims, further comprising:
determining the configurations of the hardware resources for each of the computing devices;
producing a manifest for each of the computing devices, the manifest including the configuration of the hardware resources;
determining a hardware configuration score for each of the computing devices from the manifests; and
wherein the computing devices for performing tasks are determined based on those computing devices having a configuration score exceeding a predetermined value.

13. The method of the previous claim, further comprising:
receiving an additional task; and
allocating the additional task to an idle or underutilized server having a configuration score exceeding the predetermined value.

14. A rack management controller comprising:
a network interface for communicating with a management network in communication with a plurality of servers in a rack;
a monitoring module collecting hardware utilization data from each of the plurality of servers in the rack; and
a controller operable to:
allocate tasks to some of the plurality of servers to maximize servers with substantially full hardware resource utilization;
minimize servers with less than full hardware resource utilization to perform tahe tasks; and
command any idle servers to minimize power consumption.

15. The rack management controller of the previous claim, further comprising a virtual machine manager, wherein the tasks include execution of virtual machines, and wherein the virtual machine manager migrates virtual machines to the servers.

## Amended claims

### Amended claims in accordance with Rule 137(2) EPC.

1. A system (100) for managing a plurality of computing devices (120) in a rack, each of the computing devices (120) having hardware resources; and a management network (140) coupled to the plurality of computing devices (120), the system (100) comprising:
a management network interface coupled to the management network (140); and
a controller (118) coupled to the management network interface, the controller (118) operable to:
monitor utilization of hardware resources by each of the plurality of computing devices (120);
predict a hardware utilization level for each of the computing devices (120) during a future period of time;
by a management routine automatically migrating software and/or virtual machine operations to some of the computing devices (120) in the system (100) to run at full hardware resource utilization and powering down all the other computing devices (120) of the plurality of the computing devices (120) that are unused, allocate performance of tasks to some of the plurality of computing devices (120) to maximize the number of computing devices with full hardware resource utilization for the future period of time and minimize the number of computing devices (120) with less than full hardware resource utilization performing the tasks; and wherein
powering down all the other computing devices (120) of the plurality of the computing devices (120) that are unused includes commanding any idle computing devices (120) to enter a sleep state or turn off to minimize power consumption; wherein
the predicting is performed by a machine learning model having inputs of hardware resource utilizations from the computing devices (120), and wherein the tasks are allocated based on the prediction of hardware resource utilization from the machine learning model.

2. The system of the previous claim, wherein the hardware resources include a processor unit (610), a memory (612), and an input/output controller (616), and/or wherein each computing device (120) includes a baseboard management controller in communication with the management network (140), the baseboard management controller allowing out-of-band monitoring of hardware resource utilization.

3. The system of any of the previous claims, wherein the tasks include operating a migrated virtual machine or executing a software application, and/or further comprising a power supply supplying power to each of the plurality of computing devices (120).

4. The system of any of the previous claims, further comprising a cooling system, wherein the cooling system is controlled by the controller (118) to provide cooling matching the hardware resource utilization of the plurality of computing devices (120).

5. The system of any of the previous claims, wherein the controller (118) includes a machine learning model to predict the utilization of each of the plurality of computing devices (120), the controller (118) allocating tasks based on the prediction from the machine learning model.

6. The system of any of the previous claims, wherein the controller (118) is operable to:
produce a manifest for each of the computing devices (120), the manifest including information of the configuration of hardware resources of the computing device;
determine a hardware configuration score for each of the computing devices (120) from the manifests; and wherein
the allocation of tasks is determined based on those computing devices (120) having a configuration score exceeding a predetermined value.

7. The system of any of the previous claims, wherein the controller (118) is a rack management controller (118), and/or wherein the controller (118) is operable to execute a rack level virtual machine manager that migrates virtual machines to the computing devices, the virtual machine manager migrating virtual machines to the some of the computing devices.

8. A method of allocating tasks between computing devices (120) in a rack, each of the computing devices (120) including hardware resources, the method comprising:
monitoring hardware resource utilization for each of the computing devices (120) in the rack;
predicting a hardware utilization level for each of the computing devices (120) during a future period of time;
by a management routine automatically migrating software and/or virtual machine operations to some of the computing devices (120) in the rack to run at full hardware resource utilization and powering down all the other computing devices (120) of the plurality of the computing devices (120) that are unused, allocating tasks to the computing devices (120) to maximize the number of computing devices (120) with full hardware resource utilization for the future period of time and minimizing the number of computing devices (120) having less than maximum hardware resource utilization performing the tasks; and wherein
powering down all the other computing devices (120) of the plurality of the computing devices (120) that are unused includes commanding idle computing devices (120) to enter a sleep state or turn off to minimize power consumption; wherein
the predicting is performed by a machine learning model having inputs of hardware resource utilizations from the computing devices (120), and wherein the tasks are allocated based on the prediction of hardware resource utilization from the machine learning model.

9. The method of the previous method claim, wherein the hardware resources include a processor unit (610), a memory (612), and an input/output controller (616), and/or further comprising monitoring the hardware resource utilization of each of the computing devices (120) via a management network (140), wherein each computing device (120) includes a baseboard management controller in communication with the management network (140), the baseboard management controller monitoring the hardware resource utilization of the server.

10. The method of any of the previous method claims, wherein the tasks include operating a migrated virtual machine or executing a software application, and/or further comprising controlling a cooling system to provide cooling matching the hardware resource utilization of the plurality of computing devices.

11. The method of any of the previous method claims, further comprising:
determining the configurations of the hardware resources for each of the computing devices (120);
producing a manifest for each of the computing devices (120), the manifest including the configuration of the hardware resources;
determining a hardware configuration score for each of the computing devices (120) from the manifests; and wherein
the computing devices (120) for performing tasks are determined based on those computing devices having a configuration score exceeding a predetermined value.

12. The method of the previous claim, further comprising:
receiving an additional task; and
allocating the additional task to an idle or underutilized server (120) having a configuration score exceeding the predetermined value.

13. A rack management controller (118) comprising:
a network interface for communicating with a management network (140) in communication with a plurality of servers (120) in a rack;
a monitoring module collecting hardware utilization data from each of the plurality of servers (120) in the rack; and
a controller (118) operable to:
predict a hardware utilization level for each of the servers (120) during a future period of time;
by a management routine automatically migrating software and/or virtual machine operations to some of the servers (120) in the rack to run at full hardware resource utilization and powering down all the other servers (120) of the plurality of the servers (120) that are unused, allocate tasks to some of the plurality of servers (120) to maximize the numbers of servers (120) with full hardware resource utilization for the future period of time and minimize the number of servers (120) with less than full hardware resource utilization to perform the tasks; and wherein
powering down all the other servers (120) of the plurality of the servers (120) that are unused includes commanding any idle servers (120) to enter a sleep state or turn off to minimize power consumption; wherein
the predicting is performed by a machine learning model having inputs of hardware resource utilizations from the servers (120), and wherein the tasks are allocated based on the prediction of hardware resource utilization from the machine learning model.

14. The rack management controller of the previous claim, further comprising a virtual machine manager, wherein the tasks include execution of virtual machines, and wherein the virtual machine manager migrates virtual machines to the servers (120).
